# EUROPEAN PATENT APPLICATION

(11) **EP 3 875 830 A1**
(43) Date of publication of application: **08.09.2021**
(21) Application number: 18938537.0
(22) Date of filing: 31.10.2018
(51) Int. Cl.: F16M 13/04, F16M 11/12

(54) **PAN-TILT, HANDHELD PAN-TILT AND HANDHELD PHOTOGRAPHING APPARATUS**

(71) Applicant: SZ DJI Technology Co., Ltd., Shenzhen, Guangdong 518057 (CN)
(72) Inventor: CHU, Hongpeng, Shenzhen, Guangdong 518057 (CN); LIU, Hao, Shenzhen, Guangdong 518057 (CN)
(74) Representative: Appelt, Christian W.
(86) International application number: PCT/CN2018/112931
(87) International publication number: WO 2020/087330

(57) **Abstract**

A gimbal (10) includes a pitch axis assembly (12), a roll axis assembly (14), and a yaw axis assembly (16), the roll axis assembly (14) connecting the pitch axis assembly (12) and the yaw axis assembly (16), the pitch axis assembly (12) being used to be connected to a payload (20) and drive the payload (20) to rotate. A motor (122) of the pitch axis assembly (12), a motor (142) of the roll axis assembly (14), a motor (162) of the yaw axis assembly (16) are arranged in order from top to bottom. The gimbal (10) is configured such that the motor (142) of the roll axis assembly (14) and the yaw axis assembly 16 are positioned below the payload (20). The present disclosure further discloses a handheld gimbal (100) and a handheld imaging device (1000).

## Description

### TECHNICAL FIELD

The present disclosure relates to the technical field of gimbal and, more specifically, to a gimbal, a handheld gimbal, and a handheld imaging device.

### BACKGROUND

During the shooting process, the photographer needs to observe the camera's display screen in real time to facilitate the adjustment of the imaging composition. In the shooting process of the conventional movable camera gimbal, although it has the advantage of more stable imaging, the conventional movable camera gimbal structure severely blocks the camera's screen, which affects the photographer's observation of the camera's screen, and it is inconvenient to manually adjust the camera parameters. To solve this issue, in some gimbals, the roll axis arm is designed to be non-orthogonal, but there is still the issue of blocking by the axis arm, and it is not convenient for people to touch the camera to adjust the camera parameters.

### SUMMARY

In view of this, the present disclosure provides a gimbal, a handheld gimbal, and a handheld imaging device that can reduce the blocking of the gimbal on the screen or other parts of a payload, or can completely expose the screen or other parts of the payload.

The present disclosure provides a gimbal including a pitch axis assembly, a roll axis assembly, and a yaw axis assembly. The roll axis assembly is connected to the pitch axis assembly and the yaw axis assembly, and the pitch axis assembly is used to be connected to a payload and drive the payload to rotate. A motor of the pitch axis assembly, a motor of the roll axis assembly, and a motor of the yaw axis assembly are disposed in order from top to bottom. The gimbal is configured such that the motor of the roll axis assembly and the yaw axis assembly are positioned below the payload.

The present disclosure provides a gimbal including a pitch axis assembly, a roll axis assembly, and a yaw axis assembly. The roll axis assembly is connected to the pitch axis assembly and the yaw axis assembly, and the pitch axis assembly is used to be connected to a payload and drive the payload to rotate. A motor of the pitch axis assembly, a motor of the roll axis assembly, and a motor of the yaw axis assembly are disposed in order from top to bottom. The gimbal is configured such that an axis of the yaw axis assembly passes through the motor of the roll axis assembly.

The present disclosure provides a handheld gimbal, which includes a handheld member and the gimbal described above. The yaw axis assembly is mounted at the handheld member.

The present disclosure provides a handheld imaging device, which includes an imaging device and the handheld gimbal described above. The handheld gimbal is used for stabilizing the imaging device or controlling the attitude of the imaging device.

The gimbal, handheld gimbal, and handheld imaging device of the present disclosure can reduce the blocking of the screen or other parts of the payload by the gimbal, or can completely exposed the screen or other parts of the payload, which is convenient of the user to operate the payload, which helps to improve the user experience.

Additional aspects and advantages of the technical solutions of the present disclosure will be partially provided in the following descriptions, and partially become obvious from the following descriptions. Alternatively, the additional aspects and advantages of the technical solutions can be understood from practicing the various embodiments of the present disclosure.

### BRIEF DESCRIPTION OF THE DRAWINGS

The above and other aspects and advantages of embodiments of the present disclosure will become apparent and more readily appreciated from the following descriptions made with reference to the drawings, in which:
FIG. 1 is a three-dimensional schematic diagram of a handheld imaging device according to an embodiment of the present disclosure.
FIG. 2 is an exploded schematic diagram of the handheld imaging device according to an embodiment of the present disclosure.
FIG. 3 is another exploded schematic diagram of the handheld imaging device according to an embodiment of the present disclosure.
FIG. 4 is a schematic plan view of the handheld imaging device according to an embodiment of the present disclosure.
FIG. 5 is a schematic cross-sectional view of the handheld imaging device in FIG. 4 along the A-A direction.
FIG. 6 is an enlarged schematic diagram of part VI of the handheld imaging device in FIG. 5.
FIG. 7 is an exploded schematic diagram of the handheld imaging device according to another embodiment of the present disclosure.
FIG. 8 is another exploded schematic diagram of the handheld imaging device according to another embodiment of the present disclosure.
FIG. 9 is a schematic plan view of the handheld imaging device according to another embodiment of the present disclosure.
FIG. 10 is a schematic cross-sectional view of the handheld imaging device in FIG. 9 along the B-B direction.
FIG. 11 is an enlarged schematic diagram of part XI of the handheld imaging device in FIG. 10.
FIG. 12 is a schematic partial cross-sectional view of the handheld imaging device according to an embodiment of the present disclosure.
FIG. 13 is an enlarged schematic diagram of part XIII of the handheld imaging device in FIG. 12.

### REFERENCE NUMERALS OF MAIN PARTS

- 1000: Handheld imaging device
- 100: Handheld gimbal
- 10: Gimbal
- 11: Rotation shaft
- 111: First bearing
- 112: First shaft
- 113: Second bearing
- 114: Second shaft
- 12: Pitch axis assembly
- 122: Pitch axis motor
- 1222: Pitch axis stator
- 1224: Pitch axis rotor
- 124: Payload connector
- 1242: Lens holder
- 1243: Fixing member
- 1244: Clamp member
- 1245: Lock member
- 13: Counterweight
- 14: Roll axis assembly
- 142: Roll axis motor
- 1422: Motor drive shaft
- E: Motor drive shaft axis
- 1424: Roll axis rotor
- 1425: Roll axis stator
- 144: Base
- 1442: Opening
- 1444: Accommodation groove
- 1446: Circuit board
- 146: Roll axis arm
- 148: First end cover
- 1482: End cover through hole
- 149: Second end cover
- 15: First cover
- 16: Yaw axis assembly
- 162: Yaw axis motor
- 1622: Yaw axis rotor
- 164: Support arm
- 1641: Connection member
- 1642: First arm
- 1643: Outer side surface
- 1644: Second arm
- 1645: Outer side surface
- 1646: Shaft hole
- 1648: First receiving groove
- 1649: Second receiving groove
- 17: Second cover
- 18: Connector
- 182: First connection device
- 184: Second connection device
- 19: Second interface
- 20: Handheld member
- 21: First interface
- 22: Housing
- 23: Operation member
- 30: Payload
- Y: Yaw axis assembly axis
- R: Roll axis assembly axis
- P: Pitch axis assembly axis

### DETAILED DESCRIPTION OF THE EMBODIMENTS

Embodiments of the present disclosure are described in detail below. Examples of the embodiments are shown in the accompanying drawings, in which the same or similar reference numerals indicate the same or similar elements or elements with the same or similar functions. The following embodiments described with reference to the drawings are exemplary, are only used to explain the present disclosure, and should not be understood as limitation to the present disclosure.

In the disclosure, it is to be understood that directional or positional relationships indicated by terms such as "central," "longitudinal," "lateral," "length," "width," "thickness," "up," "down," "front," "rear," "left," "right," "vertical," "horizontal," "top," "bottom," "inner," "outer," "clockwise," "counterclockwise" are the directional or positional relationships based on the drawings. These terms are for convenience and simplification of description and do not indicate or imply that the devices or components associated therewith mush have a particular direction, be configured or operated in a particular direction, and hence do not constitute limitation to the present disclosure. In addition, terms such as "first" and "second" are used herein for purposes of description and are not intended to indicate or imply relative importance or significance or imply the number of the technical feature associated therewith. Thus, features limited by "first" and "second" are intended to explicitly or implicitly include one or more than one of such features. In the description of the present disclosure, "a plurality of' relates to two or more than two, unless otherwise specified.

In the present disclosure, unless specified or limited otherwise, the terms "mounted," "connected," "coupled," are used broadly, and may be, for example, fixed connections, detachable connections, or integral connections; may be mechanical or electrical connections; may be direct connections or indirect connections via intervening structures; may be inner communications between two elements or interactions between two elements. Those skilled in the art can understand the specific meanings of the above terms according to specific situations.

Various embodiments and examples are provided in the following description to implement different structures of the present disclosure. In order to simplify the present disclosure, certain elements and settings will be described. However, these elements and settings are only examples and are not intended to limit the present disclosure. In addition, reference numerals/reference characters may be repeated in different examples in the disclosure. This repeating is for the purpose of simplification and clarity and does not indicate relations between different embodiments and/or settings. Furthermore, examples of various processes and materials are provided in the present disclosure. However, it would be appreciated by those skilled in the art that other processes and/or materials may be also applied.

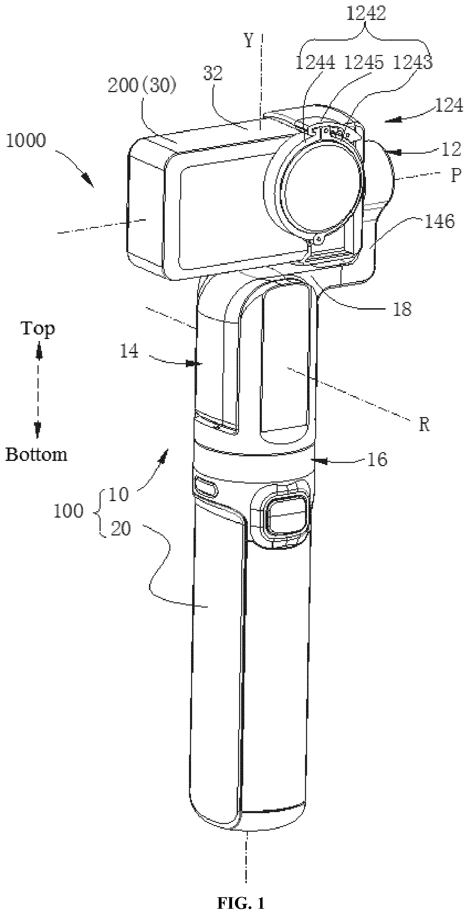

Referring to FIG. 1, a handheld imaging device 1000 of an embodiment of the present disclosure includes an imaging device 200 and a handheld gimbal 100 of the embodiments of the present disclosure. The handheld gimbal 100 can be used to stabilize the imaging device 200 or control the attitude of the imaging device 200.

The handheld gimbal 100 according to the embodiments of the present disclosure includes a handheld member 20 and a gimbal 10 according to the embodiments of the present disclosure. The gimbal 10 can be mounted at the handheld member 20.

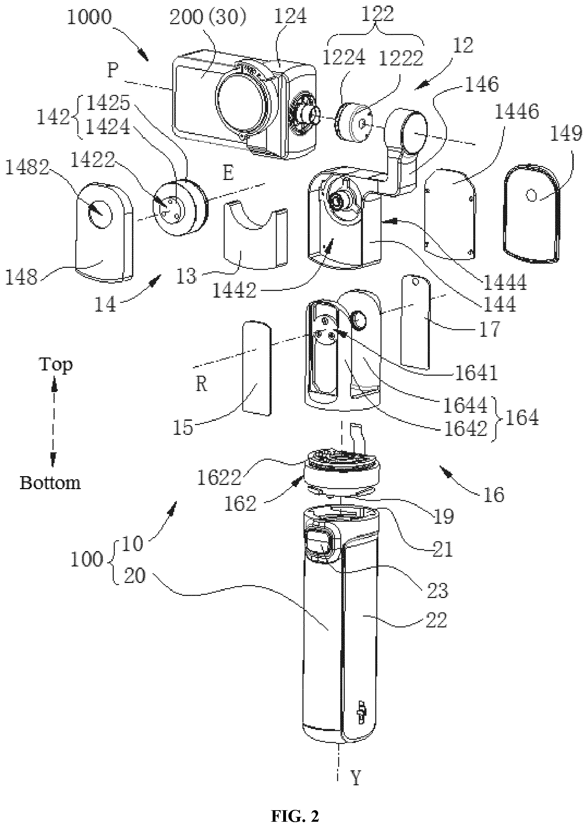

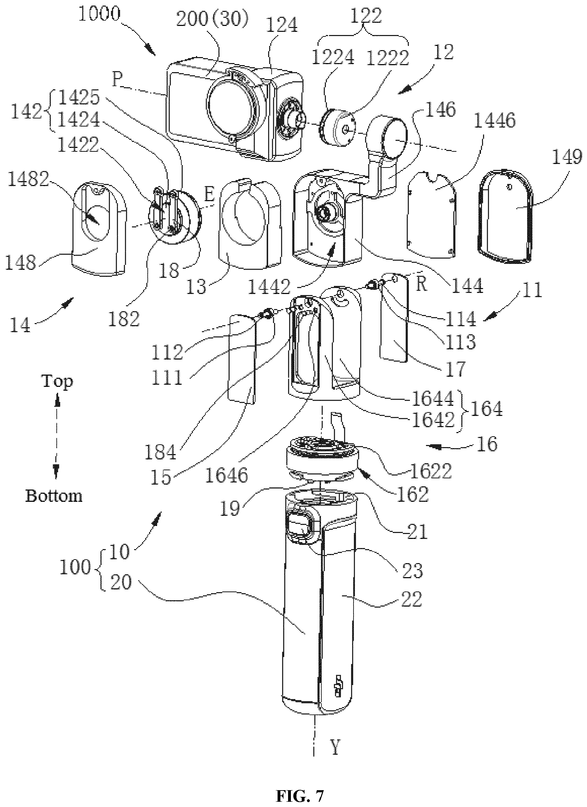

The gimbal 10 of the embodiments of the present disclosure includes a pitch axis assembly 12, a roll axis assembly 14, and a yaw axis assembly 16. The roll axis assembly 14 is connected to the pitch axis assembly 12 and the yaw axis assembly 16, and the pitch axis assembly 12 is used to be connected to a payload 30 (such as the imaging device 200) and drive the payload 30 to rotate. Referring to FIG. 2 and FIG. 7, in the illustrated orientation, a motor 122 of the pitch axis assembly 12, a motor 142 of the roll axis assembly 14, and a motor 162 of the yaw axis assembly 16 are disposed in order from top to bottom, and the gimbal 10 is configured such that the motor 142 of the roll axis assembly 14 and the yaw axis assembly 16 are positioned below the payload 30.

The gimbal 10, handheld gimbal 100, and handheld imaging device 1000 of the embodiments of the present disclosure can reduce the blocking of the gimbal 10 of the screen or other parts of the payload 30, and can even completely expose the screen or other parts of the payload 30, which is convenient for the user to operate the payload 30 and is beneficial to improve user experience.

Specifically, by reducing the blocking of the screen of the payload 30 of the gimbal 10, not only is convenient for the user to observe the screen for imaging composition, but also is convenient for the user to touch the screen to perform touch screen operations, thus improving the user experience. In addition, the layout of the gimbal 10 in the embodiments of the present disclosure can prevent the issue of singular motion of the gimbal 10 in normal use.

An axis P of the pitch axis assembly 12 may or may not pass through the payload 30. In this embodiment, the pitch axis assembly 12 is configured such that the axis P of the pitch axis assembly 12 passes through the payload 30. In other embodiments, the axis P of the pitch axis assembly 12 may not pass through the payload 30. Whether the axis P of the pitch axis assembly 12 passes through the payload 30 is not limited herein.

Specifically, when the axis P of the pitch axis assembly 12 passes through the payload 30, the axis P of the pitch axis assembly 12 may pass through the payload 30 vertically, or it may pass through the payload 30 obliquely. The axis P of the pitch axis assembly 12 may or may not pass through the center of gravity of the payload 30. The specific form in which the axis P of the pitch axis assembly 12 passes through the payload 30 is not limited herein.

Please note that for brevity of description, the motor 122 of the pitch axis assembly 12 is referred to as the pitch axis motor 122, the motor 142 of the roll axis assembly 14 is referred to as the roll axis motor 142, and the motor 162 of the yaw axis assembly 16 is referred to as the yaw axis motor 162.

In addition, the pitch axis assembly 12 may control the attitude of the payload 30 in the pitch direction, the roll axis assembly 14 may control the attitude of the payload 30 in the roll direction, and the yaw axis assembly 16 may control the attitude of the payload 30 in the yaw direction. The gimbal 10 may realize three-axis stabilization and attitude control of the payload 30, such that the payload 30 can be maintained at a better attitude. The imaging device 200 may serve as the payload 30 of the gimbal 10.

In addition, an axis R of the yaw axis assembly 16 may pass through the roll axis motor 142, such that the payload 30, the roll axis assembly 14, and the yaw axis assembly 16 can be arranged in sequence along an axis Y of the yaw axis assembly 16, such that the gimbal 10 can reduce the blocking of the screen or other parts of the payload 30, which makes the gimbal more compact.

In some embodiments, the axis Y of the yaw axis assembly 16 may intersect and may be perpendicular to the axis R of the roll axis assembly 14, the axis R of the roll axis assembly 14 and the axis P of the pitch axis assembly 12 may be orthogonal to each other, and the axis Y of the yaw axis assembly 16 may intersect and may be perpendicular to the axis P of the pitch axis assembly 12. In this way, the gimbal 10 may be an orthogonal gimbal, which can provide stabilization and attitude control of the payload 30 in three mutually perpendicular directions, thereby improving the flexibility of the gimbal 10. Specifically, the axis Y of the yaw axis assembly 16 may be the rotation axis when the yaw axis assembly 16 drives the payload 30, the roll axis assembly 14, and the pitch axis assembly 12 to rotate. The axis R of the roll axis assembly 14 may be the rotation axis when the roll axis assembly 14 drives the payload 30 and the pitch axis assembly 12 to rotate. The axis P of the pitch axis assembly 12 may be the rotation axis when the pitch axis assembly 12 drives the payload 30 to rotate.

In other embodiments, the gimbal 10 may also be a non-orthogonal gimbal, where non-orthogonal state exists between at least two of the axis Y of the yaw axis assembly 16, the axis R of the roll axis assembly 14, and the axis P of the pitch axis assembly 12.

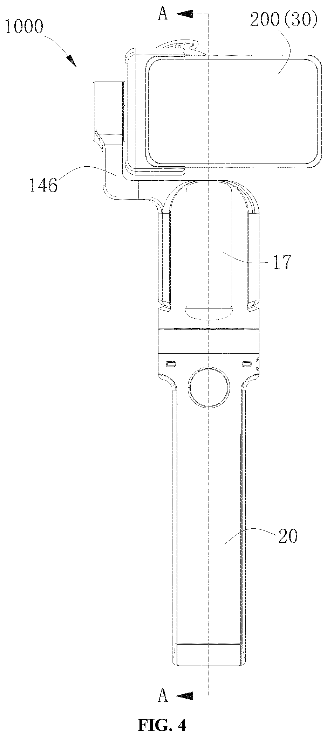

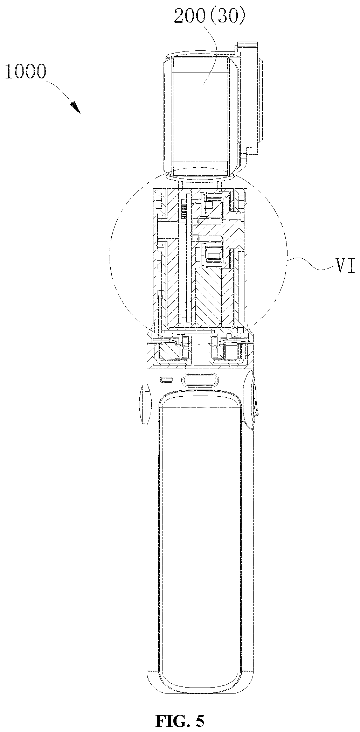

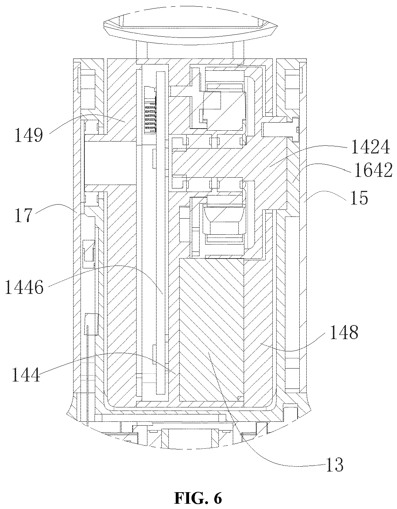

In the embodiment shown in FIG. 2 to FIG. 6 (hereinafter referred to as a first embodiment), an axis E of the motor drive shaft 1422 of the roll axis assembly 14 is the axis R of the roll axis assembly 14. As such, the roll axis motor 142 can directly drive the payload 30 and the pitch axis assembly 12 to rotate. The axis E of the motor drive shaft 1422 here refers to the center axis of the motor drive shaft 1422.

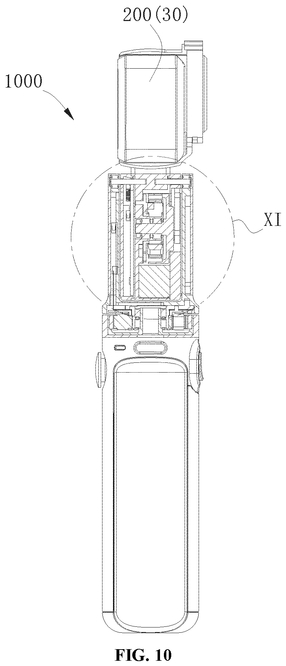

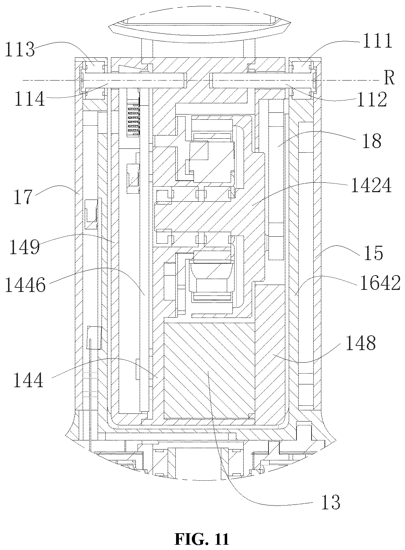

In the embodiment shown in FIG. 7 to FIG. 13 (hereinafter referred to as a second embodiment), the axis E of the motor drive shaft 1422 of the roll axis assembly 14 is disposed eccentrically with respect to the axis R of the roll axis assembly 14. As such, the roll axis motor 142 can indirectly drive the payload 30 and the pitch axis assembly 12 to rotate through a connector 18. Similarly, the axis E of the motor drive shaft 1422 here refers to the center axis of the motor drive shaft 1422. This configuration is beneficial to reduce the overall weight of the gimbal 10.

Hereinafter, the gimbal 10 of the first embodiment and the second embodiment will be described separately.

### First Embodiment

Referring to FIG. 1 to FIG. 6, the gimbal 10 of the first embodiment includes a pitch axis assembly 12, a roll axis assembly 14, and a yaw axis assembly 16. In the illustrated orientation, the pitch axis motor 122, the roll axis motor 142, and the yaw axis motor 162 are arranged in order from top to bottom.

The pitch axis assembly 12 can be used to be connected to a payload 30 (such as the imaging device 200) and drive the payload 30 to rotate. The pitch axis assembly 12 includes a pitch axis motor 122 and a payload connector 124.

The pitch axis motor 122 includes a pitch axis stator 1222 and a pitch axis rotor 1224. The pitch axis rotor 1224 can rotate about the axis P of the pitch axis assembly 12 relative to the pitch axis stator 1222, thereby driving the payload 30 to rotate about the axis P of the pitch axis assembly 12.

The payload connector 124 can be used to be connected to the payload 30. The payload 30 may be one of a sensor, an imaging device, and a mobile terminal. It can be understood that when the sensor, imaging device, and mobile terminal collects environmental information, they generally need to maintain a certain attitude to obtain more accurate information. In this way, the gimbal 10 can provide stabilization and attitude control for the sensor, imaging device, mobile terminal, etc., such that it can work in a better attitude, thereby obtaining more accurate information. More specifically, the sensor may be an attitude sensor (such as an acceleration sensor, an angle sensor, an inertial measurement unit, etc.). The imaging device may be an imaging device such as a camera and a video camera, and the mobile terminal may be a mobile phone, a tablet computer, a smart wearable device, etc. It should be understood that the imaging device may also be some mobile terminals. For example, the imaging device may be a mobile phone, a tablet computer, a smart wearable device, etc. having an imaging and video recording functions, or in other words, the mobile terminal may also be some imaging devices. In the handheld imaging device 1000, the payload 30 of the handheld gimbal 100 may be the imaging device 200. The handheld gimbal 100 can stabilize the imaging device 200 in the corresponding direction and control the attitude to keep the /300 in a better working attitude, thereby achieving a better imaging effect and improving the quality of images captured by the imaging device 200. The payload connector 124 may be fixedly connected to the pitch axis rotor 1224. In this way, the payload connector 124 can realize the connection between the payload 30 and the pitch axis assembly 12. The payload 30 may be detachably mounted at the payload connector 124. It can be understood that the payload connector 124 may also be used as a part of the pitch axis motor 122, such as a protective shell of the pitch axis rotor 1224. The payload connector 124 may include, but is not limited to, a clamp connector or a magnetic connector. The assembly and disassembly method of the payload 30 is simple, which is convenient for users to use and improves user experience. It can be understood that when the gimbal 10 adopts a clamp connector, the clamp connector can clamp the payload 30 and fix it at the pitch axis assembly 12, such that the pitch axis assembly 12 can provide the payload 30 with a stabilization function on the axis P of the pitch axis assembly 12. When the gimbal 10 adopts a magnetic connector, the magnetic connector may include a magnet, and a ferromagnetic material can be provided at the payload 30 or the housing of the payload 30 may be a ferromagnetic material, such that the payload 30 can be magnetically attracted to the magnetic connector. In this way, assembly and disassembly method of the payload 30 is simple, which is convenient for users to use.

In this embodiment, referring to FIG. 1, the payload connector 124 includes a lens holder 1242. The lens holder 1242 protrudes outward from the side of the payload connector 124 where a main body 32 of the payload 30 is sleeved. The lens holder 1242 includes a fixing member 1243, a clamp member 1244, and a lock member 1245. The clamp member 1244 can be rotatably connected to the fixing member 1243. When the clamp member 1244 and the fixing member 1243 are joined together to from a ring, the clamp member 1244 and the fixing member 1243 may be locked by the lock member 1245, and the lock member 1245 may be disposed at one end of the clamp member 1244. When the lens of the payload 30 is mounted at the fixing member 1243, the clamp member 1244 can be rotated to be connected to the fixing member 1243, and the lock member 1245 can be used to complete the locking between the clamp member 1244 and the fixing member 1243, thereby fixing the lens of the payload 30.

The roll axis assembly 14 connects the pitch axis assembly 12 and the yaw axis assembly 16. The roll axis assembly 14 includes a roll axis motor 142, a base 144, a roll axis arm 146, a first end cover 148, and a second end cover 149.

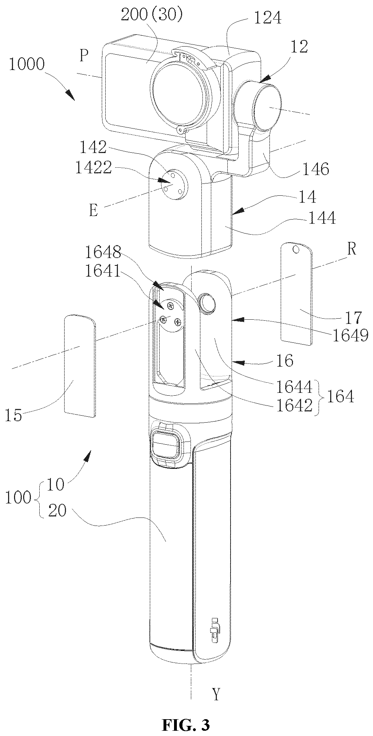

Referring to FIG. 3, the roll axis motor 142 is positioned below the payload 30. The roll axis motor 142 includes a roll axis rotor 1424 and a roll axis stator 1425. The roll axis rotor 1424 can rotate relative to the roll axis stator 1425 around the axis E of the motor drive shaft 1422, thereby driving the roll axis assembly 14 to rotate around the axis R of the roll axis assembly 14. It should be noted that the axis E of the motor drive shaft 1422 here refers to the center axis of the motor drive shaft 1422. In this embodiment, the axis E of the motor drive shaft 1422 of the roll axis assembly 14 coincides with the axis R of the roll axis assembly 14.

The base 144 of the roll axis assembly 14 may be fixedly connected with the roll axis arm 146 and the roll axis stator 1425 or the roll axis rotor 1424. As such, driven by the roll axis motor 142, the base 144 and the roll axis arm 146 can rotate around the axis R of the roll axis assembly 14.

The base 144 of the roll axis assembly 14 can house the pitch axis assembly 12 and a counterweight 13. The roll axis motor 142 is positioned in the base 144, which realizes the housing of the roll axis motor 142, which not only protects the roll axis motor 142 and reduces the entry of dust, but also makes the structure of the gimbal 10 more compact, which is beneficial to the miniaturization of the gimbal 10. The gimbal 10 includes the counterweight 13, and the counterweight 13 can be housed in the base 144, such that the space of the base 144 can be fully utilized. It can be understood that the counterweight 13 can increase the stability of the gimbal 10. Receiving the counterweight 13 in the base 144 can make full use of the space of the gimbal 10, which makes the structure of the gimbal 10 more compact, which is beneficial to the miniaturization of the gimbal 10. Specifically, the counterweight 13 may be positioned below the motor drive shaft 1422 of the roll axis assembly 14. In this way, a lighter counterweight 13 can be used to satisfy the balance of the weight of the payload 30. It can be understood that wen the weight of the payload 30 is constant, the farther away from the axis R of the payload 30 and the roll axis assembly 14, the lighter the counterweight 13 is needed for balancing. As such, the overall weight of the gimbal 10 can be reduced, which is beneficial to the light weight of the gimbal 10 and is convenient for users to use.

The roll axis arm 146 may connect the roll axis stator 1425 and the pitch axis stator 1222. Or, the roll axis arm 146 may connect the roll axis rotor 1424 and the pitch axis stator 1222. As such, the roll axis assembly 14 and the pitch axis assembly 12 can be connected. Specifically, the roll axis motor 142 can drive the roll axis arm 146 to rotate, thereby driving the roll axis assembly 14, the pitch axis assembly 12, and the payload 30 to rotate around the axis R of the roll axis assembly 14. In this way, the attitude of the payload 30 in the roll direction can be controlled. In addition, because the roll axis arm 146 can be connected to the pitch axis stator 1222, the pitch axis motor 122 can drive the payload 30 to rotate about the axis P of the pitch axis assembly 12 relative to the roll axis arm 146. In this way, the attitude of the payload 30 in the pitch direction can be controlled. In the specific structure, the roll axis arm 146 may be connected to the roll axis stator 1425 or the roll axis rotor 1424. Since the stator and the rotor of the motor rotate relative to each other, one of the two relatively rotating parts can be defined as the stator and the other as the rotor. Therefore, the roll axis arm 146 may be connected to any one of them, and may move relative to the other under the drive of the roll axis motor 142.

An opening 1442 is disposed at one side of the base 144, and an accommodation groove 1444 is disposed at the other side of the base 144. The accommodation groove 1444 contains a circuit board 1446, the first end cover 148 is mounted at the base 144 and covers the opening 1442, and the second end cover 149 is mounted at the base 144 and covers the accommodation groove 1444. As such, the first end cover 148 and the second end cover 149 can cover the opening 1442 of the base 144 and the accommodation groove 1444, which not only is beneficial to the smoothness and beautifulness in the appearance of the gimbal 10, but can also reduce dust that enters the base 144 and affects the normal operation of the circuit board 1446 and the roll axis motor 142. In addition, by placing the circuit board 1446 in the accommodation groove 1444 can make full use of the space of the base 144, which is beneficial to the compact structure of the gimbal 10. An end cover through hole 1482 is disposed at the first end cover 148, and the roll axis rotor 1424 or the roll axis stator 1425 is at least partially exposed from the end cover through hole 1482. Specifically, in this embodiment, the roll axis rotor 1424 is at least partially exposed from the end cover through hole 1482, such that the roll axis rotor 1424 can be connected to a support arm 164, thereby realizing the rotation of the support arm 164 of the yaw axis assembly 16 relative to the axis R of the roll axis assembly 14 when the roll axis assembly 14 is driven by the roll axis motor 142.

The yaw axis assembly 16 is positioned below the payload 30 and is connected to the pitch axis assembly 12 through the roll axis assembly 14. The yaw axis assembly 16 includes a yaw axis motor 162 and a support arm 164. The yaw axis motor 162 includes a yaw axis rotor 1622.

The support arm 164 may be fixedly connected to the yaw axis rotor 1622 and may be rotatably connected to the base 144. In this way, the yaw axis assembly 16 and the roll axis assembly 14 can be connected. Specifically, since the support arm 164 is fixedly connected to the yaw axis rotor 1622 and is rotatably connected to the base 144, the yaw axis motor 162 can drive the support arm 164 to rotate around the axis Y of the yaw axis assembly 16, thereby driving the roll axis assembly 14, the pitch axis assembly 12, and the payload 30 to rotate around the axis Y of the yaw axis assembly 16. As such, the attitude of the payload 30 in the yaw direction can be controlled.

The center of gravity of the payload 30 may fall on the axis P of the pitch axis assembly 12, the center of gravity of the payload 30 and the pitch axis assembly 12 may fall on the axis R of the roll axis assembly 14, and the center of gravity of the payload 30, the roll axis assembly 14, the pitch axis assembly 12, and the yaw axis assembly 16 may fall on the axis Y of the yaw axis assembly 16. In this way, the gimbal 10 can maintain the balance of the center of gravity, and the overall components rotating around each axis will not generate rotational torque, which is beneficial to increase the structural stability of the gimbal 10. The gimbal 10 has better reliability, and the torque output of the corresponding motor to counter the unbalanced center of gravity of the corresponding structure can be reduced. It can be understood that in order to achieve the structural stability of the above-mentioned gimbal 10, the structural design of the gimbal 10 may be adjusted as needed.

The support arm 164 includes a first arm 1642 and a second 1644 that are disposed spaced apart from each other. The base 144, the first end cover 148, and the second end cover 149 may be rotatably connected to the first arm 1642 and the second arm 1644, and may be at least partially positioned in the space between the first arm 1642 and the second arm 1644. The first arm 1642 may be fixedly connected to the roll axis rotor 1424 or the roll axis stator 1425. In this way, the roll axis assembly 14 and the yaw axis assembly 16 can be connected. Specifically, the base 144, the first end cover 148, and the second end cover 149 of the roll axis assembly 14 may be at least partially positioned in the space between the first arm 1642 and the second arm 1644, such that the first arm 1642 and the second arm 1644 can limit the range of movement of the roll axis assembly 14 in the direction of the rotation axis that penetrates the first arm 1642 and the second arm 1644, which can make the roll axis assembly 14 more stable. The first arm 1642 may be fixedly connected to the roll axis rotor 1424 or the roll axis stator 1425, such that when the roll axis motor 142 drives the roll axis assembly 14, the roll axis assembly 14 can rotate relative to the yaw axis assembly 16 about the axis E of the motor drive shaft 1422. Referring to FIG. 3 to FIG. 6, a first receiving groove 1648 is disposed at an outer side surface 1643 of the first arm 1642, and a second receiving groove 1649 is disposed at an outer side surface 1645 of the second arm 1644. The gimbal 10 includes a first cover 15 and a second cover 17. The first arm 1642 includes a connection member 1641 positioned in the first receiving groove 1648. The connection member 1641 may be connected to the roll axis rotor 1424 or the roll axis stator 1425. The first cover 15 is disposed in the first receiving groove 1648 and covers the connection member 1641, and the second cover 17 is disposed in the second receiving groove 1649. In this way, the first cover 15 and the second cover 17 can cover the first receiving groove 1648 and the second receiving groove 1649, which not only is beneficial to the smoothness and beautifulness in the appearance of the gimbal 10, but also can reduce the dust and water vapor that enter the connection member 1641 and affect the rotation of the gimbal 10.

Referring to FIG. 2 again, the yaw axis assembly 16 is mounted at the handheld member 20. In this way, the user can pick up the handheld gimbal 100 by holding the handheld member 20, and the gimbal 10 can provide stabilization and attitude control of the payload 30 in three different directions. Specifically, in some embodiments, a first interface 21 connected to the gimbal 10 may be disposed at the handheld member 20, and the gimbal 10 may include a second interface 19 for cooperating with the first interface 21. In some embodiments, when the gimbal 10 is supported on the handheld member 20, the first interface 21 and the second interface 19 may cooperate to form a mechanical and electrical connection between the gimbal 10 and the handheld member 20. When the handheld member 20 is separated from the gimbal 10, the gimbal 10 and the handheld member 20 may be connected in a wired or wireless communication. In this way, the user can control the operation of the gimbal 10 through the wired or wireless communication by operating the handheld member 20, which improves the operating convenience of the gimbal 10. Specifically, the handheld member 20 includes a housing 22, an operation member 23, and a controller. The controller may be disposed in the housing 22, the operation member 23 may be used to receive input information, and the controller may be used to perform the corresponding operations based in the input information. In this way, the user can input information through the operation member 23 to control the gimbal 10 to change the attitude of the payload 30. For example, when using the handheld gimbal 100, the user can input information through the operation member 23 to determine a predetermined attitude of the payload 30, such that the payload 30 can obtain the predetermined desired effect. In addition, a battery may be disposed in the housing 22. In this way, the battery can supply power to the gimbal 10 and/or the payload 30. Specifically, the handheld member 20 may be provided with a charging interface and a power supply interface. In one example, the battery may be a rechargeable lithium battery. In addition, an mounting interface may be disposed at the bottom of the housing 22. In this way, the handheld gimbal 100 can be mounted at a bracket or another fixing member through the mounting interface, and the handheld gimbal 100 can adapt to different working environments and achieve more functions. The operation member 23 may be disposed at the housing 22. The operation member 23 may include a rocker and buttons. The user can shake the rocker to control the operation of the pitch axis assembly 12, the roll axis assembly 14, and the yaw axis assembly 16 of the gimbal 10, and then adjust the payload 30 to the predetermined attitude. The user can control the work of the payload 30 through the buttons, such as capturing images and videos.

In addition, the handheld gimbal 100 may also include an attitude sensor. The attitude sensor may be used to measure the attitude of the payload 30, and the controller may be used to control the operation of the gimbal 10 based on the attitude of the payload 30. In some embodiments, the attitude sensor may be directly connected to the payload 30, thereby determining the attitude of the payload 30, as such, the attitude of the gimbal 10 can be determined, and the current attitude of the gimbal 10 can be adjusted. In this way, the handheld gimbal 100 can adjust the attitude of the payload 30 through the attitude information detected by the attitude sensor, such that the payload 30 can keep working in a predetermined attitude to obtain the desired effect.

### Second embodiment

Referring to FIG. 1, and FIG. 7 to FIG. 13, the gimbal 10 in the second embodiment includes a pitch axis assembly 12, a roll axis assembly 14, a yaw axis assembly 16, and a connector 18. In the illustrated orientation, the pitch axis motor 122, the roll axis motor 142, and the yaw axis motor 162 are arranged in order from top to bottom.

The pitch axis assembly 12 can be used to be connected to a payload 30 (such as the imaging device 200) and drive the payload 30 to rotate. The pitch axis assembly 12 includes a pitch axis motor 122 and a payload connector 124.

The pitch axis motor 122 includes a pitch axis stator 1222 and a pitch axis rotor 1224. The pitch axis rotor 1224 can rotate about the axis P of the pitch axis assembly 12 relative to the pitch axis stator 1222, thereby driving the payload 30 to rotate about the axis P of the pitch axis assembly 12.

The payload connector 124 can be used to be connected to the payload 30. The payload 30 may be one of a sensor, an imaging device, and a mobile terminal. It can be understood that when the sensor, imaging device, and mobile terminal collects environmental information, they generally need to maintain a certain attitude to obtain more accurate information. In this way, the gimbal 10 can provide stabilization and attitude control for the sensor, imaging device, mobile terminal, etc., such that it can work in a better attitude, thereby obtaining more accurate information. More specifically, the sensor may be an attitude sensor (such as an acceleration sensor, an angle sensor, an inertial measurement unit, etc.). The imaging device may be an imaging device such as a camera and a video camera, and the mobile terminal may be a mobile phone, a tablet computer, a smart wearable device, etc. It should be understood that the imaging device may also be some mobile terminals. For example, the imaging device may be a mobile phone, a tablet computer, a smart wearable device, etc. having an imaging and video recording functions, or in other words, the mobile terminal may also be some imaging devices. In the handheld imaging device 1000, the payload 30 of the handheld gimbal 100 may be the imaging device 200. The handheld gimbal 100 can stabilize the imaging device 200 in the corresponding direction and control the attitude to keep the /300 in a better working attitude, thereby achieving a better imaging effect and improving the quality of images captured by the imaging device 200. The payload connector 124 may be fixedly connected to the pitch axis rotor 1224. In this way, the payload connector 124 can realize the connection between the payload 30 and the pitch axis assembly 12. The payload 30 may be detachably mounted at the payload connector 124. It can be understood that the payload connector 124 may also be used as a part of the pitch axis motor 122, such as a protective shell of the pitch axis rotor 1224. The payload connector 124 may include, but is not limited to, a clamp connector or a magnetic connector. The assembly and disassembly method of the payload 30 is simple, which is convenient for users to use and improves user experience. It can be understood that when the gimbal 10 adopts a clamp connector, the clamp connector can clamp the payload 30 and fix it at the pitch axis assembly 12, such that the pitch axis assembly 12 can provide the payload 30 with a stabilization function on the axis P of the pitch axis assembly 12. When the gimbal 10 adopts a magnetic connector, the magnetic connector may include a magnet, and a ferromagnetic material can be provided at the payload 30 or the housing of the payload 30 may be a ferromagnetic material, such that the payload 30 can be magnetically attracted to the magnetic connector. In this way, assembly and disassembly method of the payload 30 is simple, which is convenient for users to use.

The roll axis assembly 14 connects the pitch axis assembly 12 and the yaw axis assembly 16. The roll axis assembly 14 includes a roll axis motor 142, a base 144, a roll axis arm 146, a first end cover 148, and a second end cover 149.

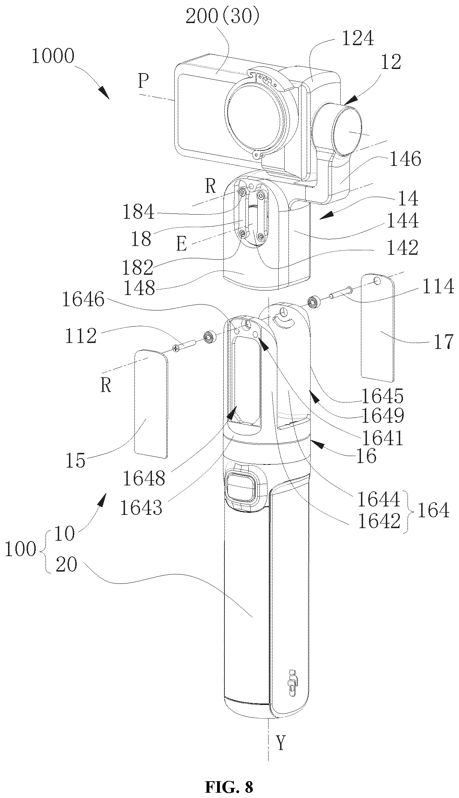

Referring to FIG. 8, the axis E of the motor drive shaft 1422 of the roll axis assembly 14 is eccentrically disposed with respect to the axis R of the roll axis assembly 14. In this way, the roll axis motor 142 can indirectly drive the payload 30 and the pitch axis assembly 12 to rotate through the connector 18. The axis E of the motor drive shaft 1422 here refers to the center axis of the motor drive shaft 1422. This is beneficial to reduce the overall weight of the gimbal 10. The roll axis motor 142 can be positioned below the payload 30. The roll axis motor 142 includes a roll axis rotor 1424 and a roll axis stator 1425. The roll axis rotor 1424 can rotate relative to the roll axis stator 1425 around the axis E of the motor drive shaft 1422, thereby indirectly driving the roll axis assembly 14 to rotate around the axis R of the roll axis assembly 14 through the connector 18. It should be noted that the axis E of the motor drive shaft 1422 here refers to the center axis of the motor drive shaft 1422. In this embodiment, the axis E of the motor drive shaft 1422 of the roll axis assembly 14 is below the axis R of the roll axis assembly 14.

The base 144 of the roll axis assembly 14 may be fixedly connected with the roll axis arm 146 and the roll axis stator 1425 or the roll axis rotor 1424. As such, driven by the roll axis motor 142, the base 144 and the roll axis arm 146 can rotate around the axis R of the roll axis assembly 14.

The base 144 of the roll axis assembly 14 can house the pitch axis assembly 12 and a counterweight 13. The roll axis motor 142 is positioned in the base 144, which realizes the housing of the roll axis motor 142, which not only protects the roll axis motor 142 and reduces the entry of dust, but also makes the structure of the gimbal 10 more compact, which is beneficial to the miniaturization of the gimbal 10. Referring to FIG. 7 again, the gimbal 10 includes the counterweight 13, and the counterweight 13 can be housed in the base 144, such that the space of the base 144 can be fully utilized. It can be understood that the counterweight 13 can increase the stability of the gimbal 10. Receiving the counterweight 13 in the base 144 can make full use of the space of the gimbal 10, which makes the structure of the gimbal 10 more compact, which is beneficial to the miniaturization of the gimbal 10. Specifically, in this embodiment, the counterweight 13 surrounds the motor drive shaft 1422 of the roll axis assembly 14. As such, other arrangement methods of the counterweight 13 can be provided. In actual production, a variety of arrangement methods can be selected based on the actual situation, which is beneficial to respond to different needs and scenarios.

The roll axis arm 146 may be connected to the roll axis stator 1425 and the pitch axis stator 1222. Or, the roll axis arm 146 may connect the roll axis rotor 1424 and the pitch axis stator 1222. As such, the roll axis assembly 14 and the pitch axis assembly 12 can be connected. Specifically, the roll axis motor 142 can drive the roll axis arm 146 to rotate through the connector 18, thereby driving the roll axis assembly 14, the pitch axis assembly 12, and the payload 30 to rotate around the axis R of the roll axis assembly 14. In this way, the attitude of the payload 30 in the roll direction can be controlled. In addition, because the roll axis arm 146 can be connected to the pitch axis stator 1222, the pitch axis motor 122 can drive the payload 30 to rotate about the axis P of the pitch axis assembly 12 relative to the roll axis arm 146. In this way, the attitude of the payload 30 in the pitch direction can be controlled. Please note that the roll axis arm 146 can be connected to the roll axis stator 1425 or the roll axis rotor 1424. Since the stator and the rotor of the motor can rotate relative to each other, and the roll axis arm 146 can be connected to any one of them, then both can move relative to one another through the transmission of the connector 18 under the drive of the roll axis motor 142.

An opening 1442 is disposed at one side of the base 144, and an accommodation groove 1444 is disposed at the other side of the base 144. The accommodation groove 1444 contains a circuit board 1446, the first end cover 148 is mounted at the base 144 and covers the opening 1442, and the second end cover 149 is mounted at the base 144 and covers the accommodation groove 1444. As such, the first end cover 148 and the second end cover 149 can cover the opening 1442 of the base 144 and the accommodation groove 1444, which not only is beneficial to the smoothness and beautifulness in the appearance of the gimbal 10, but also can reduce dust that enters the base 144 and affects the normal operation of the circuit board 1446 and the roll axis motor 142. In addition, by placing the circuit board 1446 in the accommodation groove 1444 can make full use of the space of the base 144, which is beneficial to the compact structure of the gimbal 10. An end cover through hole 1482 is disposed at the first end cover 148, and the roll axis rotor 1424 or the roll axis stator 1425 is at least partially exposed from the end cover through hole 1482. Specifically, in this embodiment, the roll axis rotor 1424 is at least partially exposed from the end cover through hole 1482, such that the roll axis rotor 1424 can be indirectly connected with the support arm 164 through the connector 18. As such, under to drive of the roll axis motor 142, the connector 18 can drive the roll axis assembly 14 to rotate about the axis R of the roll axis assembly 14 relative to the yaw axis assembly 16.

Referring to FIG. 7, the yaw axis assembly 16 is positioned below the payload 30 and is connected to the pitch axis assembly 12 through the roll axis assembly 14. The yaw axis assembly 16 includes a yaw axis motor 162 and a support arm 164. The yaw axis motor 162 includes a yaw axis rotor 1622.

The support arm 164 may be fixedly connected to the yaw axis rotor 1622 and may be rotatably connected to the base 144. In this way, the yaw axis assembly 16 and the roll axis assembly 14 can be connected. Specifically, since the support arm 164 is fixedly connected to the yaw axis rotor 1622 and is rotatably connected to the base 144, therefore, the yaw axis motor 162 can drive the support arm 164 to rotate around the axis Y of the yaw axis assembly 16, thereby driving the roll axis assembly 14, the pitch axis assembly 12, and the payload 30 to rotate around the axis Y of the yaw axis assembly 16. As such, the attitude of the payload 30 in the yaw direction can be controlled.

The center of gravity of the payload 30 may fall on the axis P of the pitch axis assembly 12, the center of gravity of the payload 30 and the pitch axis assembly 12 may fall on the axis R of the roll axis assembly 14, and the center of gravity of the payload 30, the roll axis assembly 14, the pitch axis assembly 12, and the yaw axis assembly 16 may fall on the axis Y of the yaw axis assembly 16. In this way, the gimbal 10 can maintain the balance of the center of gravity, and the overall components rotating around each axis will not generate rotational torque, which is beneficial to increase the structural stability of the gimbal 10. The gimbal 10 has better reliability, and can reduce the torque output of the corresponding motor to counter the uneven center of gravity of the corresponding structure. It can be understood that in order to achieve the structural stability of the above-mentioned gimbal 10, the structural design of the gimbal 10 may be adjusted as needed.

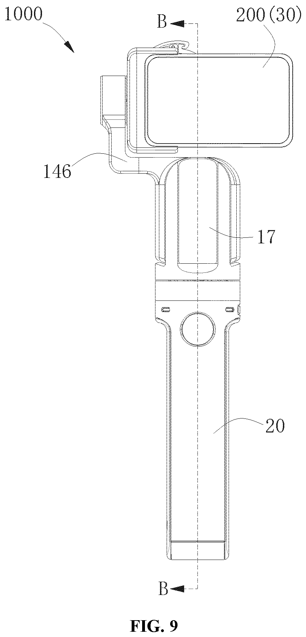

Referring to FIG. 8, the support arm 164 includes a first arm 1642 and a second 1644 that are disposed spaced apart from each other. The base 144, the first end cover 148, and the second end cover 149 may be rotatably connected to the first arm 1642 and the second arm 1644, and may be at least partially positioned in the space between the first arm 1642 and the second arm 1644. The first arm 1642 may be fixedly connected to the roll axis rotor 1424 or the roll axis stator 1425. In this way, the roll axis assembly 14 and the yaw axis assembly 16 can be connected. Specifically, the base 144, the first end cover 148, and the second end cover 149 of the roll axis assembly 14 may be at least partially positioned in the space between the first arm 1642 and the second arm 1644, such that the first arm 1642 and the second arm 1644 can limit the range of movement of the roll axis assembly 14, which can make the roll axis assembly 14 more stable. The first arm 1642 may be fixedly connected to the roll axis rotor 1424 or the roll axis stator 1425, such that when the roll axis motor 142 drives the roll axis assembly 14, the roll axis assembly 14 can rotate relative to the yaw axis assembly 16 around the axis R of the roll axis assembly 14 under the transmission of the connector 18. Referring to FIG. 9 to FIG. 11, a first receiving groove 1648 is disposed at an outer side surface 1643 of the first arm 1642, and a second receiving groove 1649 is disposed at an outer side surface 1645 of the second arm 1644. The gimbal 10 includes a first cover 15 and a second cover 17. The first arm 1642 includes a connection member 1641 positioned in the first receiving groove 1648. The connection member 1641 may be connected to the roll axis rotor 1424 or the roll axis stator 1425. The first cover 15 is disposed in the first receiving groove 1648 and covers the connection member 1641, and the second cover 17 is disposed in the second receiving groove 1649. In this way, the first cover 15 and the second cover 17 can cover the first receiving groove 1648 and the second receiving groove 1649, which not only is beneficial to the smoothness and beautifulness in the appearance of the gimbal 10, but also can reduce the dust and water vapor that enter the connection member 1641 and affect the rotation of the gimbal 10.

Referring FIG. 7 again, the yaw axis assembly 16 can be mounted at the handheld member 20. In this way, the user can hold the handheld gimbal 100 through the handheld member 20, and the gimbal 10 can provide stabilization and attitude control for the payload 30 in three different directions. Specifically, in some embodiments, a first interface 21 connected to the gimbal 10 may be disposed at the handheld member 20, and the gimbal 10 may include a second interface 19 for cooperating with the first interface 21. In some embodiments, when the gimbal 10 is supported on the handheld member 20, the first interface 21 and the second interface 19 may cooperate to form a mechanical and electrical connection between the gimbal 10 and the handheld member 20. When the handheld member 20 is separated from the gimbal 10, the gimbal 10 and the handheld member 20 may be connected in a wired or wireless communication. In this way, the user can control the operation of the gimbal 10 through the wired or wireless communication by operating the handheld member 20, which improves the operating convenience of the gimbal 10.

Specifically, the handheld member 20 includes a housing 22, an operation member 23, and a controller. The controller may be disposed in the housing 22, the operation member 23 may be used to receive input information, and the controller may be used to perform the corresponding operations based in the input information. In this way, the user can input information through the operation member 23 to control the gimbal 10 to change the attitude of the payload 30. For example, when using the handheld gimbal 100, the user can input information through the operation member 23 to determine a predetermined attitude of the payload 30, such that the payload 30 can obtain the predetermined desired effect. In addition, a battery may be disposed in the housing 22. In this way, the battery can supply power to the gimbal 10 and/or the payload 30. Specifically, the handheld member 20 may be provided with a charging interface and a power supply interface. In one example, the battery may be a rechargeable lithium battery. In addition, an mounting interface may be disposed at the bottom of the housing 22. In this way, the handheld gimbal 100 can be mounted at a bracket or another fixing member through the mounting interface, and the handheld gimbal 100 can adapt to different working environments and achieve more functions. The operation member 23 may be disposed at the housing 22. The operation member 23 may include a rocker and buttons. The user can shake the rocker to control the operation of the pitch axis assembly 12, the roll axis assembly 14, and the yaw axis assembly 16 of the gimbal 10, and then adjust the payload 30 to the predetermined attitude. The user can control the work of the payload 30 through the buttons, such as capturing images and videos.

In addition, the handheld gimbal 100 may also include an attitude sensor. The attitude sensor may be used to measure the attitude of the payload 30, and the controller may be used to control the operation of the gimbal 10 based on the attitude of the payload 30. In some embodiments, the attitude sensor may be directly connected to the payload 30, thereby determining the attitude of the payload 30, as such, the attitude of the gimbal 10 can be determined, and the current attitude of the gimbal 10 can be adjusted. In this way, the handheld gimbal 100 can adjust the attitude of the payload 30 through the attitude information detected by the attitude sensor, such that the payload 30 can keep working in a predetermined attitude to obtain the desired effect.

Referring to FIG. 7, FIG. 12, and FIG. 13, the connector 18 rotatably connects the roll axis assembly 14 and the yaw axis assembly 16, and the roll axis motor 142 is used to drive the connector 18 to move and drive the pitch axis assembly 12 to rotate around the axis R of the roll axis assembly 14. It can be understood that based on the consideration of portability, the counterweight 13 is not beneficial to the miniaturization of the gimbal structure, and the smaller the counterweight 13 is, the better the user experience. In the embodiments of the present disclosure, since the axis E of the motor drive shaft 1422 is positioned below the axis R of the roll axis assembly 14, as such, compared with the first embodiment, the axis of the roll axis assembly 14 is farther from the center of mass of the payload 30 and the pitch axis assembly 12. Therefore, the weights of the roll axis assembly 14 and the roll axis motor 142 can be better used for balancing the payload 30. In addition, since the total weight needed for balancing is certain when the structure of the gimbal 10 is fixed, when the weights of the roll axis assembly 14 and the roll axis motor 142 are used for balancing in a larger proportions, the weight of the additional counterweight 13 can also be greatly reduced. Therefore, compared with the first embodiment, the overall size and weight of the gimbal 10 can be further reduced, which is convenient for the user to use and carry.

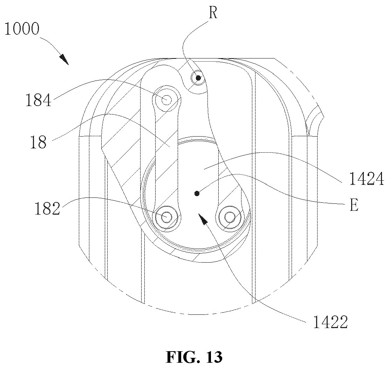

In the illustrated embodiments, the connector 18 includes a connection rod. Specifically, the number of connection rod may be one or more. The number of connection rods is not limited herein. Preferably, the number of connection rods is two. More preferably, the two connection rods are disposed symmetrically about the motor drive shaft 1422, as shown in FIG. 7 and FIG. 13. In this way, the mass balance of the roll axis assembly 14 can always be maintained during the rotation. In addition, one end of each of the tow connection rods can be rotatably connected to the roll axis rotor 1424, and the other end can be rotatably connected to the support arm 164. This connection method can form a four-bar structure, such that the roll axis assembly 14 can drive the pitch axis assembly 12 and the payload 30 to rotate more smoothly. In addition, when the number of connection rods is two, one of the two connection rods can be designed as an elastic pull rod or press rod, and then the pulling force or pressure can be applied to the other rod of the connection rod, thereby eliminating the radial clearance of at two ends of the connection rod during rotation and improving the transmission accuracy. In other embodiments, the connector 18 may include gears, friction wheels, or belts. In this way, other forms of the connector 18 can be provides, and the specific form of the connector 18 can be selected based on the actual conditions and requirements, which is beneficial to cope with various scenarios.

A first connection device 182 is disposed at the roll axis rotor 1424, the first connection device 182 is eccentrically disposed with respect to the motor drive shaft 1422 of the roll axis assembly 14. The first connection device 182 can rotate to be connected to the connector 18. In this way, the connection between the connector 18 and the roll axis rotor 1424 can be realized. Specifically, the connector 18 can be connected to the rotation pair of the roll axis rotor 1424, that is, both the connector 18 and the roll axis rotor 1424 can rotate around the first connection device 182. In addition, the first connection device 182 may be a bolt or a pin. The specific form of the first connection device 182 is not limited herein. Referring to FIG. 8, FIG. 11, and FIG. 13, a second connection device 184 and a shaft hole 1646 are disposed at the first arm 1642. In this way, the connection between the connector 18 and the first arm 1642 can be realized. Specifically, a pin may be used as the second connection device 184. The pin shaft is generally locked with a split pin, which is reliable in operation and convenient is disassembly, which is beneficial to the assembly and maintenance of the gimbal 10. In addition, the number of the second connection device 184 and the shaft hole 1646 can be adapted to the connector 18. For example, in the example of FIG. 8, the connector 18 is two connection rods, and the number of the second connection device 184 and the shaft hole 1646 are both two. It should be noted that in the example of FIG. 8, the connector 18 is connected to the first arm 1642 from the inner side of the first arm 1642 through the second connection device 184 and the shaft hole 1646.

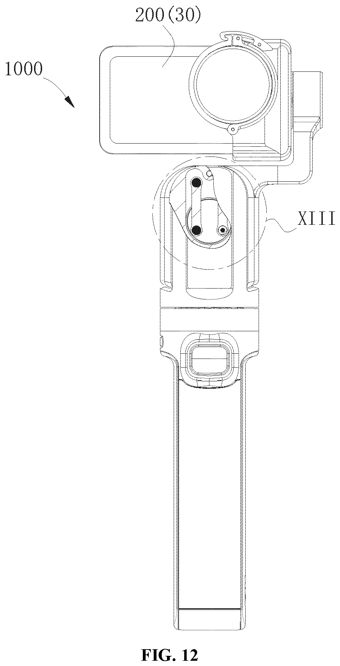

Referring to FIG. 8 again, the roll axis assembly 14 includes a base 144, and the roll axis motor 142 is positioned in the base 144. The gimbal 10 includes a first shaft 112 and a second shaft 114 positioned on the axis R of the roll axis assembly 14. The base 144 may be rotatably disposed at the yaw axis assembly 16 through the first shaft 112 and the second shaft 114. In this way, the roll axis assembly 14 and the yaw axis assembly 16 can be connected, and the roll axis assembly 14 can rotate relative to the yaw axis assembly 16 around the axis R, where the first shaft 112 and the second shaft 114 are positioned. Specifically, referring to FIG. 12 and FIG. 13, when the roll axis rotor 1424 rotates clockwise around the motor drive shaft 1422, the connector 18 is driven by the roll axis motor 142 to drive the base 144 of the roll axis assembly 14 to rotate clockwise around the axis R, where the first shaft 112 and the second shaft 114 are positioned. As such, the pitch axis assembly 12 and the payload 30 can also rotate counterclockwise around the axis R, where the first shaft 112 and the second shaft 114 are positioned. When the roll axis motor 142 rotates counterclockwise around the motor drive shaft 1422, driven by the roll axis motor 142, the connector 18 can drive the base 144 of the roll axis assembly 14 to rotate clockwise around the axis R, where the first shaft 112 and the second shaft 114 are positioned. As such, the pitch axis assembly 12 and the payload 30 can also rotate clockwise around the axis R, where the first shaft 112 and the second shaft 114 are positioned. That is, the roll axis motor 142 can indirectly drive the base 144 of the roll axis assembly 14 to rotate by means of transmission, thereby eccentrically separating the axis R of the roll axis assembly 14 and the axis E of the motor drive shaft 1422 to above the axis E of the motor drive shaft 1422, thereby reducing the weight of the counterweight 13.

Referring to FIG. 7, FIG. 8, and FIG. 11 again, the gimbal 10 includes a first bearing 111 and a second bearing 113. The first bearing 111 is sleeved on the first shaft 112, and the second bearing 113 is sleeved on the second shaft 114. The first bearing can be fixed on the first arm 1642, and the second bearing can be fixed on the second arm 1644. In this way, the frictional force of the base 144 of the roll axis assembly 14 rotating around the axis of the first shaft 112 and the second shaft 114 can be reduced, such that the rotation is smoother, which can improve the user experience.

In the present description, descriptions using terms such as "certain embodiments," "an embodiment," "some embodiments," "illustrative embodiment," "example," "specific example," or "some examples," mean that characteristics, structures, materials, or features described in relation to the embodiment or example are included in at least one embodiment or example of the present disclosure. In the present description, illustrative expression of the above terms does not necessarily mean the same embodiment or example. Further, specific characteristics, structures, materials, or features may be combined in one or multiple embodiments or examples in a suitable manner.

Although embodiments of the present disclosure are illustrated and described above, the above embodiments are illustrative, and do not limit the scope of the present disclosure. A person having ordinary skills in the art can make changes, modifications, substitutions, and variations based on the present disclosure.

## Claims

1. A gimbal comprising:
a pitch axis assembly;
a roll axis assembly; and
a yaw axis assembly;
wherein the roll axis assembly connects the pitch axis assembly and the yaw axis assembly, the pitch axis assembly is used to be connected to a payload and drive the payload to rotate, a motor of the pitch axis assembly, a motor of the roll axis assembly, and a motor of the yaw axis assembly are disposed in order from top to bottom, the gimbal is configured such that the motor of the roll axis assembly and the yaw axis assembly are positioned below the payload.

2. The gimbal of claim 1, wherein:
an axis of the yaw axis assembly intersects and is perpendicular to an axis of the roll axis assembly, the axis of the roll axis assembly and an axis of the pitch axis assembly are orthogonal to each other, the axis of the yaw axis assembly intersects and is perpendicular to the axis of the pitch axis assembly.

3. The gimbal of claim 1, wherein:
an axis of a motor drive shaft of the roll axis assembly coincides with an axis of the roll axis assembly.

4. The gimbal of claim 1, wherein:
an axis of a motor drive shaft of the roll axis assembly is eccentrically disposed with respect to an axis of the roll axis assembly.

5. The gimbal of claim 4, wherein:
the gimbal includes a connector, the connector rotatably connecting the roll axis assembly and the yaw axis assembly, the motor of the roll axis assembly being used to drive the connector to move and drive the pitch axis assembly to rotate around the axis of the roll axis assembly.

6. The gimbal of claim 5, wherein:
the motor drive shaft of the roll axis assembly is positioned below the axis of the roll axis assembly.

7. The gimbal of claim 5, wherein:
the motor of the roll axis assembly includes a roll axis rotor, a first connection device is disposed at the roll axis rotor, the first connection device being eccentrically disposed with respect to the motor drive shaft of the roll axis assembly, the first connection device being rotatably connected to the connector.

8. The gimbal of claim 5, wherein:
the roll axis assembly includes a base, the motor of the roll axis assembly being positioned in the base;
the gimbal includes a first shaft and a second shaft on the axis of the roll axis assembly, the base being rotatably disposed at the yaw axis assembly through the first shaft and the second shaft.

9. The gimbal of claim 5, wherein
the connector includes a connection rod, a gear, a friction wheel, or a belt.

10. The gimbal of claim 1, wherein:
the motor of the roll axis assembly includes a roll axis stator and a roll axis rotor;
the motor of the pitch axis assembly includes a pitch axis stator;
the roll axis assembly includes a roll axis arm;
the roll axis arm connecting the roll axis stator and the pitch axis stator, or the roll axis arm connecting the roll axis rotor and the pitch axis stator.

11. The gimbal of claim 10, wherein:
the roll axis assembly includes a base;
the yaw axis assembly includes a support arm;
the motor of the yaw axis assembly includes a yaw axis rotor;
the base fixedly connects the roll axis arm and the roll axis stator or the roll axis rotor;
the support arm is fixedly connected to the yaw axis rotor;
the support arm is rotatably connected to the base.

12. The gimbal of claim 11, wherein:
the gimbal includes a counterweight, and the counterweight is received in the base.

13. The gimbal of claim 12, wherein:
the counterweight is positioned below a motor drive shaft of the roll axis assembly.

14. The gimbal of claim 12, wherein:
the counterweight surrounds a motor drive shaft of the roll axis assembly.

15. The gimbal of claim 11, wherein:
the motor of the roll axis assembly is positioned in the base.

16. The gimbal of claim 15, wherein:
the roll axis assembly includes a first end cover and a second end cover, an opening is disposed at one side of the base, an accommodation groove is disposed at the other side of the base, a circuit board is accommodated in the accommodation groove, the first end cover is mounted at the base and covers the opening, the second end cover is mounted at the base and covers the accommodation groove.

17. The gimbal of claim 16, wherein:
the support arm includes a first arm and a second arm spaced apart from each other, the base, the first end cover, and the second end cover rotatably connect the first arm and the second arm, and are at least partially positioned in a space between the first arm and the second arm.

18. The gimbal of claim 17, wherein:
an end cover through hole is disposed at the first end cover, the roll axis rotor or the roll axis stator is at least partially exposed from the end cover through hole.

19. The gimbal of claim 17, wherein:
the gimbal includes a connector, the connector rotatably connecting the roll axis assembly and the yaw axis assembly, the motor of the roll axis assembly being used to drive the connector to move and drive the pitch axis assembly to rotate around a rotation axis, the rotation axis being different from the motor drive shaft of the roll axis assembly that drives the connector to move, a second connection device and a shaft hole being disposed at the first arm, the second connection device being connected to the connector and disposed at the shaft hole.

20. The gimbal of claim 17, wherein:
a first receiving groove is disposed at an outer side surface of the first arm, a second receiving groove is disposed at an outer side surface of the second arm;
the gimbal includes a first cover and a second cover, the first arm including a connection member positioned in the first receiving groove, the connection member being connected to the roll axis rotor or the roll axis stator, the first cover being disposed in the first receiving groove and covering the connection member, the second cover being disposed in the second receiving groove.

21. The gimbal of claim 1, wherein:
the pitch axis assembly includes a payload connector for connecting the payload, the payload connector including a lens holder, the lens holder being disposed to protrude outward from a side of the payload connector where a main body of the payload is sleeved, the lens holder including a fixing member, a clamp member, and a lock member, the clamp member being rotatably connected with the fixing member, the clamp member and the fixing member form a ring when being connected to each other, the clamp member and the fixing member being locked by the lock member, the lock member being disposed at one end of the clamp member, after a lens of the payload is mounted at the fixing member, after the clamp member is rotated to be connected to the fixing member, locking between the clamp member and the fixing member is achieved by the lock member, thereby fixing the lens of the payload.

22. A gimbal comprising:
a pitch axis assembly;
a roll axis assembly; and
a yaw axis assembly;
wherein the roll axis assembly connects the pitch axis assembly and the yaw axis assembly, the pitch axis assembly is used to be connected to a payload and drive the payload to rotate, a motor of the pitch axis assembly, a motor of the roll axis assembly, and a motor of the yaw axis assembly are disposed in order from top to bottom, the gimbal is configured such that an axis of the yaw axis assembly passes through the motor of the roll axis assembly.

23. The gimbal of claim 22, wherein:
the axis of the yaw axis assembly intersects and is perpendicular to an axis of the roll axis assembly, the axis of the roll axis assembly and an axis of the pitch axis assembly are orthogonal to each other, the axis of the yaw axis assembly intersects and is perpendicular to the axis of the pitch axis assembly.

24. The gimbal of claim 22, wherein:
a motor drive axis of the roll axis assembly is an axis of the roll axis assembly.

25. The gimbal of claim 22, wherein:
a motor drive axis of the roll axis assembly is eccentrically disposed with respect to an axis of the roll axis assembly.

26. The gimbal of claim 25, wherein:
the gimbal includes a connector, the connector rotatably connecting the roll axis assembly and the yaw axis assembly, the motor of the roll axis assembly being used to drive the connector to move and drive the pitch axis assembly to rotate around the axis of the roll axis assembly.

27. The gimbal of claim 26, wherein:
the motor drive shaft of the roll axis assembly is positioned below the axis of the roll axis assembly.

28. The gimbal of claim 26, wherein:
the motor of the roll axis assembly includes a roll axis rotor, a first connection device is disposed at the roll axis rotor, the first connection device being eccentrically disposed with respect to the motor drive shaft of the roll axis assembly, the first connection device being rotatably connected to the connector.

29. The gimbal of claim 26, wherein:
the roll axis assembly includes a base, the motor of the roll axis assembly being positioned in the base;
the gimbal includes a first shaft and a second shaft on the axis of the roll axis assembly, the base being rotatably disposed at the yaw axis assembly through the first shaft and the second shaft.

30. The gimbal of claim 26, wherein:
the connector includes a connection rod, a gear, a friction wheel, or a belt.

31. A handheld gimbal comprising:
a handheld member; and
the gimbal according to any one of claims 1-30, the yaw axis assembly being mounted at the handheld member.

32. The handheld gimbal of claim 31, wherein:
when the handheld member is separated from the gimbal, the gimbal and the handheld member are connected in a wired or a wireless communication.

33. The handheld gimbal of claim 31, wherein:
the handheld member includes a housing, an operation member, and a controller, the operation member being disposed at the housing, the controller being disposed in the housing, the operation member being configured to receive input information, the controller being used to perform a corresponding operation based on the input information.

34. The handheld gimbal of claim 33, wherein:
the handheld member further includes an attitude sensor, the attitude sensor being used to measure an attitude of the payload, the controller being used to control the operation of the gimbal based on the attitude of the payload.

35. The handheld imaging device comprising:
an imaging device; and
the handheld gimbal according to any one of claims 31-34, the handheld gimbal being used for stabilizing the imaging device or controlling an attitude of the imaging device.
